# EUROPÄISCHE PATENTSCHRIFT

(11) **EP 2 733 372 B1**
(45) Veröffentlichungstag und Bekanntmachung des Hinweises auf die Patenterteilung: **10.04.2019**
(21) Anmeldenummer: 13154921.4
(22) Anmeldetag: 12.02.2013
(51) Int. Cl.: F16C 19/18, F16C 33/41, F16C 33/40

(54) **ZWEIREIHIGES WÄLZLAGER IN TANDEM-ANORDNUNG MIT KAMMKÄFIGEN**
DOUBLE-ROW ROLLING BEARING IN TANDEM ARRANGEMENT WITH PRONG CAGES
ROULEMENT À DEUX RANGÉES DISPOSÉES EN TANDEM AVEC DE CAGES À LANGUETTES

(30) Priorität: 16.11.2012 US 201261727258 P
(43) Veröffentlichungstag der Anmeldung: 21.05.2014
(73) Patentinhaber: Schaeffler Technologies AG & Co. KG, 91074 Herzogenaurach (DE)
(72) Erfinder: Labelle, Chad, Troy, MI 48083 (US)

(56) Entgegenhaltungen:
- JP-A- 2005 036 858
- JP-A- 2011 241 979
- US-A1- 2012 087 612
- US-B1- 6 276 836

## Beschreibung

### Gebiet der Erfindung

Die vorliegende Erfindung betrifft in Allgemeinen Wälzlager und insbesondere Tandem-Kugellager.

### Hintergrund der Erfindung

Wälzlager finden einen weit verbreiteten Einsatz in verschiedenen mechanischen Anwendungen einschließlich auf dem Gebiet von Kraftfahrzeugen. Tandem-Wälzlager weisen zwei Reihen von Wälzkörpern auf. Die beiden Reihen werden gestuft angeordnet, in axialer Richtung zueinander versetzt. Solche Reihen schließen normalerweise Käfige zur Halterung und Trennung der Wälzkörper voneinander in Umfangsrichtung ein. Eine Unterart von solchen Tademlagern sind Tandem-Kugellager, in denen die Wälzkörper Kugeln sind. Tandem-Kugellager-Baueinheiten können eine Unterbaueinheit von kleinen und eine Unterbaueinheit von großen Wälzkörpern aufweisen. Jede Untereinheit weist einen Käfig und eine Mehrzahl von Wälzkörpern auf. Die Halterung der Wälzkörper-Unterbaueinheiten hängt von der diametrischen Interfenz zwischen dem Halterungsdurchmesser der kleineren Wälzkörper-Unterbaueinheit, welcher als der an der radial inneren Fläche der Wälzkörper gebildete Durchmesser definiert wird, und dem Durchmesser eines an einem axialen Ende des Innenrings gebildeten Durchmesser eines Halteelements. Geringfügige Abweichungen des Halterungsdurchmessers der kleineren Wälzkörper-Unterbaueinheit auf Grund von geometrischen Toleranzen, Feuchtigkeitsaufnahme, und/oder Wärmedehnung können eine übermäßige oder unzureichende Halterung der kleineren Wälzkörper-Unterbaueinheit an dem Innenring verursachen.

Käfige für die Trennung von Wälzkörpern werden typischerweise aus Kunststoff durch ein Spritzgießverfahren hergestellt. Die US-Patentanmeldung 2010/0189386 A1 offenbart ein zweireihiges Schrägkugellager, wobei eine Reihe als Zweipunktlagerung und die andere Reihe als Vierpunktlagerung ausgeführt ist.

Die aktuell bei Kugellagern verwendeten zwei Hauptarten von Käfigen sind geschlossene und offene Käfige. Geschlossene Käfige halten die Wälzkörper in der Umfangsrichtung und in beiden axialen Richtungen. Bei einem Einbau in einer Lagereinheit werden die in einem geschlossenen Käfig angeordneten Wälzkörper entweder durch den Käfig oder durch die Laufbahnen der Ringe um einer gegebenen Achse gehalten. Das US-Patent 6,783,279 B2 offenbart ein zweireihiges Kugellager in O-Anordnung mit einem geschlossenen Käfig, in welchem Lager die Wälzkörper durch geschlossene Käfige gehalten werden. Diese geschlossenen Käfige benötigen zusätzlichen Raum zwischen den Wälzkörper-Unterbaueinheiten, um das für den Betrieb benötigte Spiel aufrechtzuhalten. Geschlossene Käfige sind folglich auf Grund ihrer Gestaltung häufig empfindlicher in Bezug auf ihre Halteeigenschaften als offene Käfige, und die durch geschlossene Käfige generierten Haltekräfte sind höher als bei offenen Käfigen.

Offene Käfige trennen Wälzkörper voneinander in der Umfangsrichtung und halten die Wälzkörper an einer der axialen Seiten. Die US-Patentanmeldung 2010/0296761 A1 offenbart ein zweireihiges Schrägkugelrollenlager in O-Anordnung mit einem offenen Käfig.

Diese offenen Käfige halten die Wälzkörper weder in der äußeren radialen Richtung noch in beiden axialen Richtungen.

Das Dokument JP 2011 241 979 A offenbart ein zweireihiges Schrägkugellager, wobei die Kugelreihen in einerTandemanordnung angeordnet sind. Die Kugeln der beiden Reihen sind in einander mit den offenen Seiten zugewandten Kammkäfigen gehalten.

Während des Einbaus von Käfig-Unterbaueinheiten an einen Innenring einer Lagerbaueinheit wäre eine Halterung der Wälzkörper sowohl in der äußeren radialen Richtung sowie in den axialen Richtungen wünschenswert.

Es wäre weiterhin wünschenswert, die Wälzkörper während des Einbaus der Unterbaueinheiten an den Außenring in den Käfigen zu halten. Nach Befestigung der Wälzkörper-Unterbaueinheiten an dem Innenring, wird diese Innenring-Unterbaueinheit durch eine kurze Strecke entlang einer Welle fallengelassen, wobei die Unterbaueinheit mit den kleineren Wälzkörpern mit der Vorderseite nach unten orientiert ist. Die Innenring-Unterbaueinheit bleibt an einer Zwischenposition stehen, bevor sie in die vorgesehene Lage in Bezug auf den Außenring gedrückt wird. Die Halterung der kleineren Wälzkörper-Unterbaueinheit am Sitz der kleineren Laufbahn des Innenrings ist während des Einbaus notwendig.

Folglich existiert ein Bedarf an Tandem-Wälzlagern, die die Vorteile sowohl von offenen wie auch von geschlossenen Käfigen aufweisen. Es gibt einen Bedarf an einem Käfig für ein Tandem-Wälzlager, der nicht über die erforderlichen höheren Breitenmaße oder über die durch geschlossene Käfige gegebene Steifigkeit verfügt, aber trotzdem eine verbesserte Halterung der Wälzkörper während des Einbaus sicherstellt.

### Zusammenfassung

Erfindungsgemäß ist ein Tandem-Wälzlager mit den Merkmalen des Anspruchs 1 vorgesehen. Die Erfindung offenbart demnach ein Tandem-Wälzlager, das einen Innenlagerring und einen Außenlagerring aufweist, wobei jeder dieser Ringe mindestens zwei Laufbahnen begrenzt. Eine erste Wälzkörper-Unterbaueinheit weist eine erste Mehrzahl von Wälzkörpern und einen ersten Käfig auf und ist in einem ersten Paar von Laufbahnen in den Innen- und Außenlageringen angeordnet. Der erste Käfig weist einen ersten Ring mit einer Mehrzahl von sich axial erstrecken Vorsprüngen auf, welche jeweils ein axiales freies Ende haben, wobei Wälzkörper haltende Taschen zwischen jeweils benachbarten Paaren von Vorsprüngen gebildet werden. Jeder Vorsprung schließt ein Paar von radial äußeren Nasen ein, welche sich in einer Umfangsrichtung in benachbarte Taschen erstrecken. Die radial äußeren Nasen, welche sich von benachbarten Vorsprüngen in jede der Taschen erstrecken, bilden eine radial äußere Haltefläche für je einen Wälzkörper der ersten Mehrzahl von Wälzkörpern in der entsprechenden Tasche. Eine partiell sphärische Fläche an einer inneren Fläche des ersten Rings und radial innere, jeweils zwischen den Vorsprüngen jeder der Taschen angeordnete, teilzylindrische Flächen sind jeweils in Kontakt mit einem entsprechenden Wälzkörper der ersten Mehrzahl von Wälzkörpern. Eine zweite Wälzkörper-Unterbaueinheit weist eine zweite Mehrzahl von Wälzkörpern und einen zweiten Käfig auf und ist in einem zweiten Paar von Laufbahnen in den Innen- und Außenlageringen angeordnet. Der zweite Käfig weist einen zweiten Ring mit einer Mehrzahl von sich axial erstreckenden Vorsprüngen auf, welche jeweils ein axiales freies Ende haben, wobei Wälzkörper haltende Taschen zwischen jeweils benachbarten Paaren von Vorsprüngen gebildet werden. Jeder Vorsprung schließt ein Paar von radial inneren Nasen ein, welche sich in einer Umfangsrichtung in benachbarte Taschen erstrecken. Die radial inneren Nasen, welche sich von benachbarten Vorsprüngen in jede der Taschen erstrecken, bilden eine radial innere Haltefläche für je einen Wälzkörper der zweiten Mehrzahl von Wälzkörpern in der entsprechenden Tasche.

Eine partiell sphärische Fläche an einer inneren Fläche des zweiten Rings und radial äußere, jeweils zwischen den Vorsprüngen jeder der Taschen angeordnete, teilzylindrische Flächen sind jeweils in Kontakt mit einem entsprechenden Wälzkörper der zweiten Mehrzahl von Wälzkörpern. Die freien Enden der Vorsprünge des ersten Käfigs und des zweiten Käfigs sind einander zugewandt.

### Kurze Beschreibung der Zeichnungen

- Fig. 1: ist eine Querschnitts-Ansicht eines Tandem-Wälzlagers gemäß der vorliegenden Erfindung.
- Fig. 2: bis 4 sind perspektivische Ansichten eines ersten Käfigs und einer ersten Wälzkörper-Unterbaueinheit.
- Fig. 5-7: sind perspektivische Ansichten eines zweiten Käfigs und einer zweiten Wälzkörper-Unterbaueinheit.
- Fig. 8: ist eine perspektivische Ansicht des zweiten Käfigs.
- Fig. 9: und 10 sind perspektivische Ansichten des zweiten Käfigs, wobei nicht sichtbare Linien gezeigt sind.
- Fig. 11: ist eine perspektivische Ansicht einer alternativen Ausführung des ersten Käfigs.
- Fig. 12: ist eine perspektivische Ansicht einer alternativen Ausführung des zweiten Käfigs.
- Fig. 13: ist eine Draufsicht des ersten Käfigs.
- Fig. 14: ist eine Vorderansicht des ersten Käfigs.
- Fig. 15: ist eine Draufsicht des zweiten Käfigs.
- Fig. 16: ist eine Vorderansicht des zweiten Käfigs.

### Ausführliche Beschreibung der bevorzugten Ausführungen

Bestimmte, in der folgenden Beschreibung verwendete Fachbegriffe, sind lediglich aus Bequemlichkeitsgründen verwendet worden und sind nicht als ausschließend zu betrachten. Die Wörter "innere", "äußere", "nach innen" und "nach außen" beziehen sich auf Richtungen zu oder weg von den in den Zeichnungen gekennzeichneten Teilen. Ein Bezug auf eine Liste mit Aufzählungen formuliert als "mindestens eins von a, b, oder c" (wobei a, b, und c die aufgezählten Einzelheiten darstellen) bedeutet eine beliebige der Einzelheiten a, b, oder c, oder Kombinationen daraus. Die Fachbegriffe schließen die oben konkret angegebenen Wörter, daraus abgeleitete Begriffe und Wörter ähnlicher Bedeutung ein.

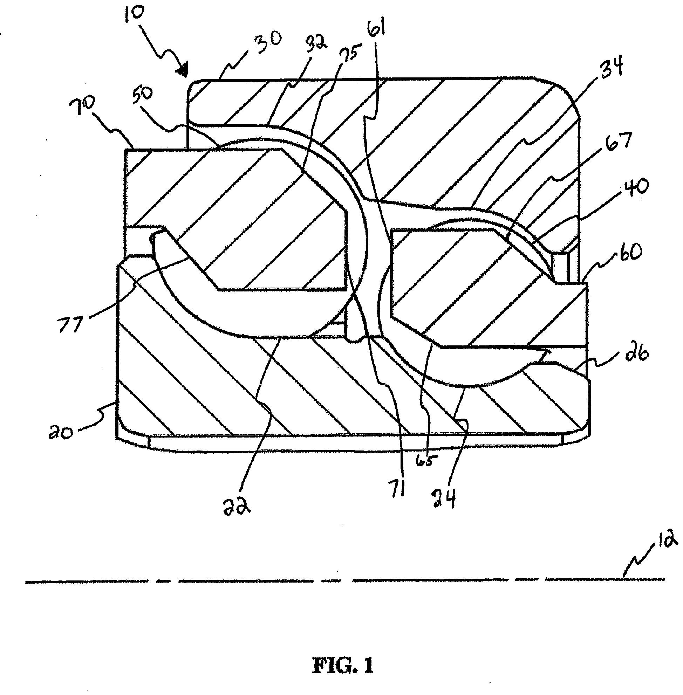

Figur 1 zeigt eine bevorzugte Ausführung eines Tandem-Wälzlagers 10 gemäß der vorliegenden Erfindung. Das Tandem-Wälzlager 10 weist einen koaxial zu einem Außenring 30 angeordneten Innenring 20 auf. Die Innen- und Außenringe 20, 30 begrenzen jeweils mindestens zwei Laufbahnen 22, 24, 32, 34 zur Stützung der Wälzkörper 40, 50 in der radialen Richtung. Zwischen den Innen- und Außenringen 20, 30 sind Mehrzahlen von Wälzkörpern 40, 50 angeordnet, um die Ringe 20, 30 bei Drehbewegungen zu stützen. Die Wälzkörper 40, 50 sind vorzugsweise Kugeln, und das Lager ist bevorzugt ein Tandem-Kugellager. Erste und zweite Käfige 60, 70 weisen Abstandshalter in Umfangsrichtung für die Mehrzahlen von Wälzkörpern 40, 50 auf. Bei der Montage werden die Mehrzahlen von Wälzkörpern 40, 50 in radiale Richtung in die Käfige 60, 70 eingesetzt. Verfahren zur Herstellung der Innen- und Außenringe 20, 30 sind allgemein bekannt. Die Innen- und Außenringe 20, 30 können aus jedem geeigneten Werkstoff mit den gewünschten Härte- und Belastbarkeitseigenschaften gefertigt werden, wie zum Beispiel aber ohne Einschränkung, aus durchgehärtetem oder aus einsatzgehärtetem Stahl.

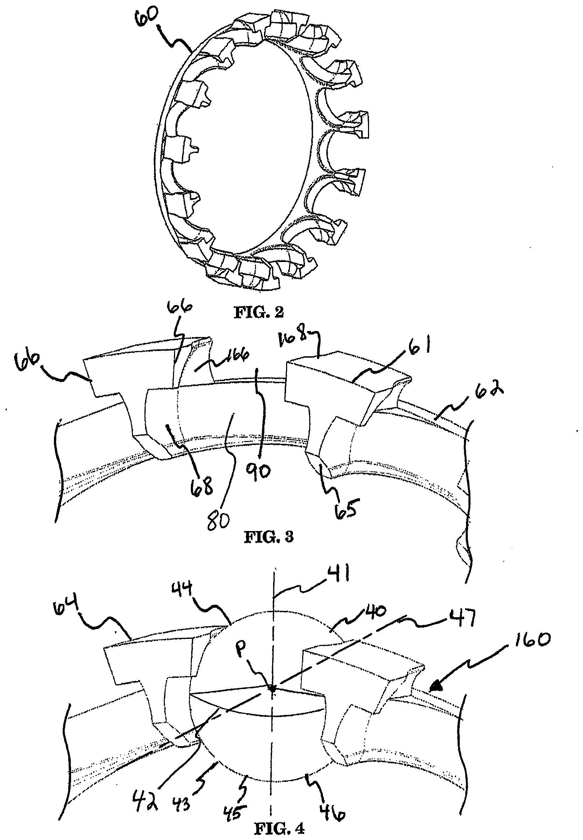

Es sind zwei Wälzkörper-Unterbaueinheiten 160, 170 vorgesehen. Fig. 4 zeigt eine erste Wälzkörper-Unterbaueinheit 160 mit einem der Wälzkörper der ersten Mehrzahl von Wälzkörpern 40 und den ersten Käfig 60. Wenn das Tandem-Wälzlager 10 montiert ist, befindet sich der erste Käfig 60 in einem ersten Paar der Laufbahnen 24, 34 in den Innen- und Außenringen 20, 30. Die Figuren 2-4 zeigen, dass der erste Käfig 60 einen ersten Ring 62 aufweist, der mit einer Mehrzahl von, ein axiales freies Ende 61 aufweisenden, sich axial erstreckenden Vorsprüngen 64 versehen ist. Haltetaschen 90 für die Wälzkörper sind zwischen jedem benachbarten Paar der sich axial erstreckenden Vorsprünge 64 gebildet. Die Vorsprünge 64 weisen jeweils ein Paar von radial äußeren Nasen 66 auf, welche sich in eine Umfangsrichtung in benachbarte Haltetaschen 90 hinein erstrecken. Die radial äußeren Nasen 66, welche sich von benachbarten Vorsprüngen 64 in jede der benachbarten Haltetaschen 90 hinein erstrecken, begrenzen radial äußere Halteflächen 166, 168 für jeweils einen der Wälzkörper der ersten Mehrzahl von Wälzkörpern 40 in der entsprechenden Tasche 90. Die radial äußeren Halteflächen 166, 168 sind vorzugsweise einer Kontaktfläche der Wälzkörper 40 angepasst, und sind in bevorzugten Gestaltungen partiell sphärische Flächen. Radial innere, partiell zylindrische Flächen 68 befinden sich auf den Vorsprüngen 64 jeweils radial einwärts von der entsprechenden äußeren Nase 66 der jeweiligen Tasche 90. Eine an einer Innenwand des ersten Rings 62 geformte partiell sphärische Fläche 80 bildet eine radial innere Stützung für den Wälzkörper 40 und weist einen hakelfreien Übergang zu den radial inneren partiell zylindrischen Flächen 68 auf. Der erste Käfig 60 wird vorzugsweise als Ganzes in einem Stück aus Kunststoff gefertigt.

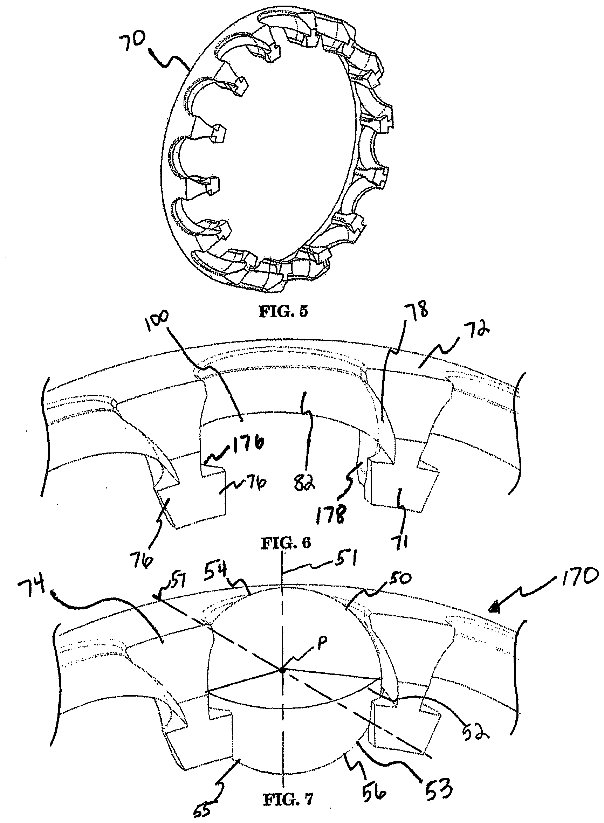

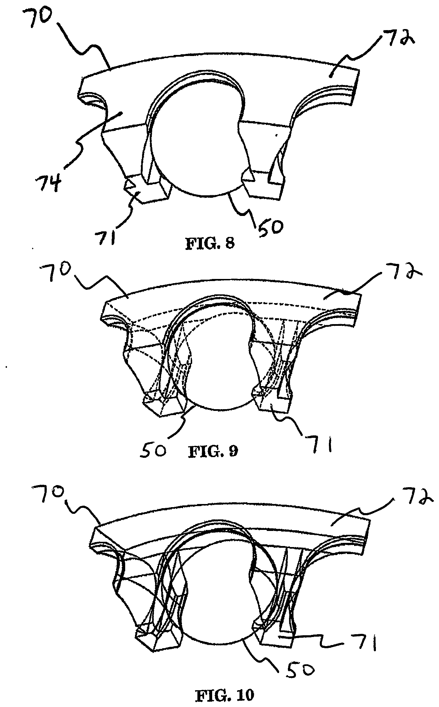

Die Figuren 7-10 zeigen eine zweite Wälzkörper-Unterbaueinheit 170 mit einem der Wälzkörper der zweiten Mehrzahl von Wälzkörpern 50 und den zweiten Käfig 70. Die zweite Wälzkörper-Unterbaueinheit 170 hat einen größeren Gesamtdurchmesser als die erste Wälzkörper-Unterbaueinheit 160. Wenn das Tandem-Wälzlager 10 montiert ist, befindet sich der zweite Käfig 70 in einem zweiten Paar der Laufbahnen 22, 32 in den Innen- und Außenringen 20, 30. Die Figuren 5-7 zeigen, dass der zweite Käfig 70 einen zweiten Ring 72 aufweist, der mit einer Mehrzahl von, ein axiales freies Ende 71 aufweisenden, sich axial erstreckenden Vorsprüngen 74 versehen ist. Haltetaschen 100 für die Wälzkörper sind zwischen jedem benachbarten Paar der Vorsprünge 74 gebildet. Die Vorsprünge 74 weisen jeweils ein Paar von radial inneren Nasen 76 auf, welche sich in die Umfangsrichtung in jede der benachbarten Haltetaschen 100 hinein erstrecken. Die radial inneren Nasen 76, welche sich von benachbarten Vorsprüngen 74 in jede der benachbarten Haltetaschen 100 hinein erstrecken, begrenzen radial innere Halteflächen 176, 178 für jeweils einen der Wälzkörper der zweiten Mehrzahl von Wälzkörpern 50 in der entsprechenden Tasche 100. Die radial inneren Halteflächen 176, 178 sind vorzugsweise einer Kontaktfläche der Wälzkörper angepasst, und sind in bevorzugten Gestaltungen partielle sphärische Flächen. Radial äußere, partiell zylindrische Flächen 78 befinden sich auf den Vorsprüngen 74 jeweils radial auswärts von der entsprechenden inneren Nase 76 der jeweiligen Tasche 100. Eine an einer Innenwand des zweiten Rings 72 geformte partiell sphärische Fläche 82 bildet eine radial äußere Stützung für den Wälzkörper 50 und weist einen hakelfreien Übergang zu den radial äußeren partiell zylindrischen Flächen 78 auf. Der zweite Käfig 70 wird vorzugsweise als Ganzes in einem Stück aus Kunststoff gefertigt.

Die axialen freien Enden 61, 71 der Vorsprünge 64, 74 des ersten und des zweiten Käfigs 60, 70 sind einander zugewandt. Die Wälzkörper-Unterbaueinheiten 160,170 des vorliegenden Tandem-Wälzlagers 10 können näher an einander angeordnet werden, als Tandem-Wälzlager mit geschlossenen Käfigen, welche auf Grund der geschlossenen Käfiggestaltung zusätzlichen Raum für das erforderliche Spiel zwischen dem Wälzkörper-Unterbaueinheiten benötigen. Auf Grund der offenen Gestaltung der Käfige 60, 70 gemäß der Erfindung, kann der kürzeste Abstand zwischen der ersten Mehrzahl von Wälzkörpern 40 und der zweiten Mehrzahl von Wälzkörpern 50 reduziert werden.

In der bevorzugten Ausführung eines Tandem-Kugellagers weisen die erste und die zweite Mehrzahl von Wälzkörpern 40, 50 sphärische Wälzkörper auf, die jeweils auf einer Radialachse 41, 51 angeordnet sind, welche sich durch einen axialen Mittelpunkt 12 des Tandem-Kugellagers 10 erstreckt und einen orthogonal zu der Radialachse 41, 51 angeordneten Äquator 42, 52 aufweist, der die sphärischen Wälzkörper in radial innere Halbkugeln 43, 53 und radial äußere Halbkugeln 44,54 teilt. Die Wälzkörper 40, 50 der ersten und zweiten Mehrzahl von sphärischen Wälzkörpern weisen jeweils einen Mittelpunkt P auf, durch den sich die Radialachsen 41, 51 hindurch erstrecken. Die Äquator 42, 52 begrenzen eine sich orthogonal zu den Radialachsen 41, 51 erstreckende Ebene. Eine Axialebene 47, 57 erstreckt sich durch den Mittelpunkt P und verläuft parallel und radial versetzt zum axialen Mittelpunkt 12 des Tandem-Kugellagers 10.

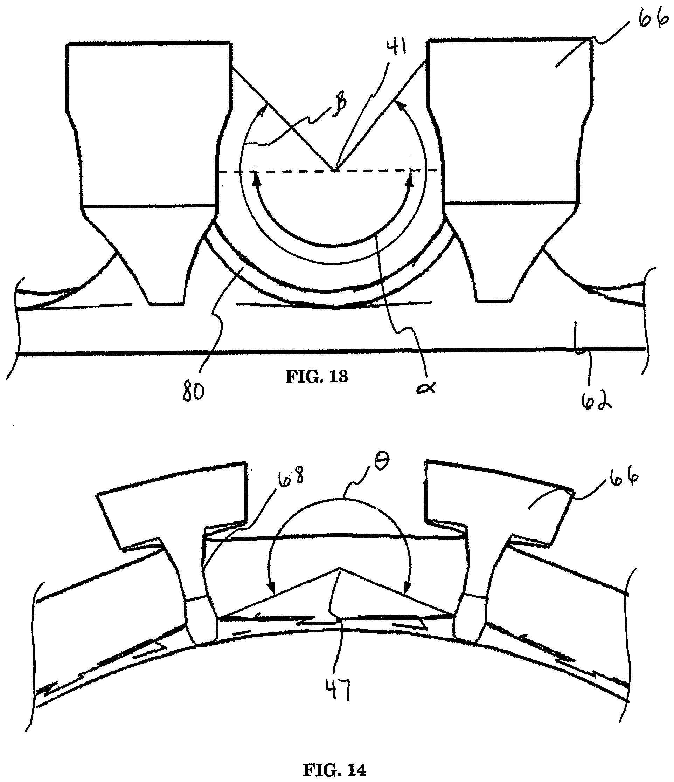

Um gute Halteeigenschaften mit der Ausführung mit einem offenen Käfig sicherzustellen, kontaktieren die radial äußeren Nasen 66 des ersten Käfigs 60 zwei Quadranten 45, 46 der radial äußeren Halbkugel 44 jedes der Wälzkörper 40 der ersten Mehrzahl von Wälzkörpern, welche jeweils benachbart zu den freien axialen Enden 61 der Vorsprünge 64 sind, und die partiell sphärische Fläche 80 des ersten Käfigs 60 und/oder die partiell zylindrischen Flächen 68 kontaktieren die radial innere Halbkugel 43. Die partiell sphärische Fläche 80 erstreckt sich um die Radialachse 41 der ersten Mehrzahl von Wälzkörpern 40. Wie in Fig. 13 zu sehen ist, wird der Winkel α durch die partiell sphärische Fläche 80 definiert, die sich um die Radialachse 41 erstreckt. Der Winkel α liegt bevorzugt im Bereich von 170° bis 190°. Der Winkel β wird zum Teil durch die äußeren Halteflächen 166, 168 definiert und erstreckt sich bevorzugt im Bereich von ca. 260° bis 270° um die Radialachse 41. Fig. 14 zeigt dass der Winkel ϑ teilweise durch die radial inneren partiell zylindrischen Flächen 68 definiert wird und dass er sich bevorzugt im Bereich von ca. 225° bis 255° um die Axialachse 47 erstreckt.

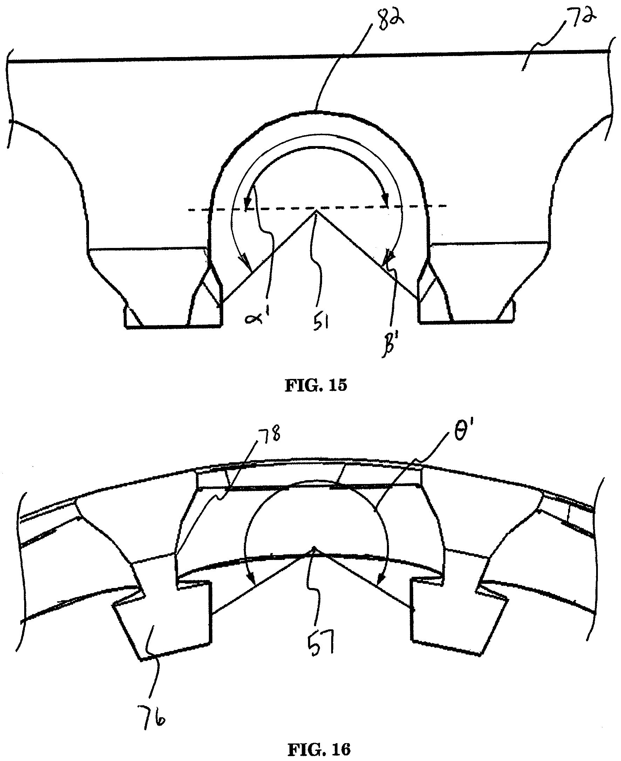

Bei dem zweiten Käfig 70 kontaktieren die radial inneren Nasen 76 zwei Quadranten 55, 56 der radial inneren Halbkugel 53 jedes der Wälzkörper 50 der zweiten Mehrzahl von Wälzkörpern, welche jeweils benachbart zu den freien axialen Enden 71 der Vorsprünge 74 sind, und die partiell sphärische Fläche 82 des zweiten Käfigs 70 und/oder die partiell zylindrischen Flächen 78 kontaktieren die radial äußere Halbkugel 54. Die partiell sphärische Fläche 82 erstreckt sich um die Radialachse 51 der zweiten Mehrzahl von Wälzkörpern 50. Wie in Fig. 15 zu sehen ist, wird der Winkel a' durch die partiell sphärische Fläche 82 definiert, die sich um der Radialachse 51 erstreckt. Der Winkel a' liegt bevorzugt im Bereich von 170° bis 190°. Der Winkel β` wird zum Teil durch die inneren Halteflächen 176, 178 definiert und erstreckt sich bevorzugt im Bereich von ca. 260° bis 270° um die Radialachse 51. Fig. 16 zeigt dass der Winkel ϑ' teilweise durch die radial äußeren partiell zylindrischen Flächen 78 definiert wird und dass er sich bevorzugt im Bereich von ca. 225° bis 255° um die Axialachse 57 erstreckt.

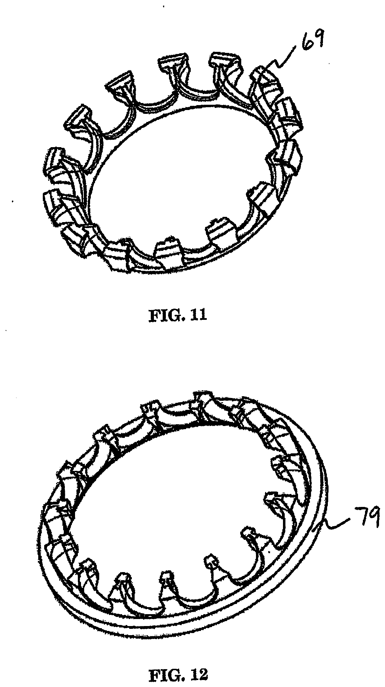

Vorzugsweise weisen die Vorsprünge 64 des ersten Käfigs 60 jeweils einen ersten abgeschrägten Abschnitt 65 an einer radial inneren, dem axialen freien Ende 61 benachbarten Fläche auf. Die Vorsprünge 64 des ersten Käfigs 60 weisen vorzugsweise auch jeweils einen zweiten abgeschrägten Abschnitt 67 an einer radial äußeren, dem ersten Ring 62 benachbarten Fläche auf. Fig. 11 zeigt, dass jeder Vorsprung 64 des ersten Käfigs 60 auch einen dritten abgeschrägten Abschnitt 69 an einer radial äußeren, dem axialen freien Ende 61 benachbarten Fläche aufweist.

Auf ähnliche Weise weisen die Vorsprünge 74 des zweiten Käfigs 70 jeweils einen ersten abgeschrägten Abschnitt 75 an einer radial äußeren, dem axialen freien Ende 71 benachbarten Fläche auf. Die Vorsprünge 74 des zweiten Käfigs 70 weisen vorzugsweise auch jeweils einen zweiten abgeschrägten Abschnitt 77 an einer radial inneren, dem zweiten Ring 72 benachbarten Fläche auf. Der zweite Ring 72 kann zusätzlich eine radial verlaufende Rippe 79 aufweisen, die sich radial nach außen bis jenseits der Vorsprünge 74 des zweiten Käfigs 70 erstreckt.

In einer weiteren, in Fig. 12 gezeigten alternativen Ausbildung kann der zweite Ring 72 eine radial verlaufende Rippe 79 aufweisen, die sich radial nach innen bis jenseits der Vorsprünge 74 des zweiten Käfigs 70 erstreckt.

Bezugnehmend wieder auf Fig. 1 ist zu sehen, dass der Innenring 20 an einem axialen Ende ein Halteelement 26 aufweist. Das Halteelement 26 ist eine ringförmige Rippe, dessen Durchmesser größer ist als der Durchmesser der benachbarten Laufbahn 24. Die kleinere Wälzkörper-Unterbaueinheit 160 weist einen kleineren Haltedurchmesser, als der Durchmesser des Halteelements 26 des Innenrings 20 auf. Die kleinere Wälzkörper-Unterbaueinheit 160 wird über das Halteelement 26 in die Laufbahn 24 gepresst und durch das Halteelement 26 fest in Position gehalten.

Nach dieser ausführlichen Beschreibung verschiedener Ausführungen des vorliegenden Tandem-Wälzlagers wird es dem Fachmann klar sein und von ihm gewürdigt werden, das zahlreiche physische Veränderungen in der Vorrichtung, von denen nur einige in der ausführlichen Beschreibung beispielhaft erwähnt wurden, ohne Veränderung des erfinderischen Gedankens und der darin verkörperten Prinzipien möglich wären. Die beschriebenen Ausführungen sind deshalb in jeder Beziehung als beispielhaft und nicht als einschränkend zu betrachten. Der Geltungsbereich der Erfindung ergibt sich aus den beigefügten Ansprüchen und nicht aus der oben angegebenen Beschreibung.

## Patentansprüche

1. Tandem-Wälzlager (10) umfassend:
- einen Innenlagerring (20) und einen Außenlagerring (30), wobei jeder dieser Lagerringe (20, 30) mindestens zwei Laufbahnen (22, 24, 32, 34) begrenzt,
- eine erste Wälzkörper-Unterbaueinheit (160) mit einer ersten Mehrzahl von Wälzkörpern (40) und einem ersten, in einem ersten Paar von Laufbahnen (24, 34) in dem Innen- und Außenlagerringen (20, 30) angeordneten Käfig (60),
- wobei der erste Käfig (60) einen ersten Ring (62) mit einer Mehrzahl von sich axial erstreckenden Vorsprüngen (64) aufweist, jeder Vorsprung (64) ein axiales freies Ende (61) besitzt, und Haltetaschen (90) für die Wälzkörper (40) jeweils zwischen benachbarten Paaren von Vorsprüngen (64) vorgesehen sind,
- wobei jeder der Vorsprünge (64) ein Paar von radial äußeren Nasen (66) aufweist, welche sich in eine Umfangsrichtung in benachbarte Haltetaschen (90) hinein erstrecken, wobei die radial äußeren Nasen, Nasen (66), welche sich von benachbarten Vorsprüngen (64) in jede der Haltetaschen (90) hinein erstrecken, eine radial äußere Haltefläche (166, 168) für jeweils einen der Wälzkörper der ersten Mehrzahl von Wälzkörpern (40) in der entsprechenden Haltetasche (90) begrenzen, wobei eine partiell sphärische Fläche (80) an einer inneren Fläche des ersten Rings (62) und jeweilige radial innere, zwischen den Vorsprüngen der jeweiligen Haltetasche (90) angeordnete, partiell zylindrische Flächen (68) einen entsprechenden Wälzkörper der ersten Mehrzahl von Wälzkörpern (40) kontaktieren; und
- eine zweite Wälzkörper-Unterbaueinheit (170) mit einer zweiten Mehrzahl von Wälzkörpern (50) und einem zweiten, in einem zweiten Paar von Laufbahnen (22, 32) in dem Innen- und dem Außenlagerring (20, 30) angeordneten Käfig (70),
- wobei der zweite Käfig (70) einen zweiten Ring (72) mit einer Mehrzahl von sich axial erstreckenden Vorsprüngen (74) aufweist, jeder Vorsprung (74) ein axiales freies Ende (71) besitzt, und Haltetaschen (100) für die Wälzkörper (50) jeweils zwischen benachbarten Paaren von Vorsprüngen (74) vorgesehen sind,
- wobei jeder der Vorsprünge (74) ein Paar von radial inneren Nasen (76) aufweist, welche sich in die Umfangsrichtung in benachbarte Haltetaschen (100) hinein erstrecken, wobei die radial inneren Nasen (76), welche sich von benachbarten Vorsprüngen (74) in jede der Haltetaschen (100) hinein erstrecken, eine radial innere Haltefläche (176, 178) für jeweils einen der Wälzkörper der zweiten Mehrzahl von Wälzkörpern (50) in der entsprechenden Haltetasche (100) begrenzen, wobei eine partiell sphärische Fläche (82) an einer inneren Fläche des zweiten Rings (72) und jeweilige radial äußere, zwischen den Vorsprüngen (74) der jeweiligen Haltetasche (100) angeordnete, partiell zylindrische Flächen (78) einen entsprechenden Wälzkörper der zweiten Mehrzahl von Wälzkörpern (50) kontaktieren; und
- wobei die freien Enden (61, 71) der Vorsprünge (64, 74) des ersten und des zweiten Käfigs (60, 70) einander zugewandt sind.

2. Tandem-Wälzlager (10) nach Anspruch 1, wobei die erste und die zweite Mehrzahl von Wälzkörpern (40, 50) sphärische Wälzkörper aufweisen, welche jeweils eine Radialachse (41, 51) aufweisen, die sich durch einen axialen Mittelpunkt (12) des Tandem-Wälzlagers (10) erstreckt, wobei eine Axialachse parallel und radial versetzt zu dem axialen Mittelpunkt (12) des Tandem-Wälzlagers (10) verläuft, wobei ein zur Radialachse orthogonal verlaufender Äquator (42, 52) die sphärischen (40, 50) in radial innere und radial äußere Halbkugeln (43, 53, 44, 54) unterteilt.

3. Tandem-Wälzlager (10) nach Anspruch 2, wobei die radial äußeren Nasen (66) des ersten Käfigs (60) zwei Quadranten (45, 46) der radial äußeren Halbkugel (44) jedes der den freien Enden (61) der Vorsprünge (64) benachbarten sphärischen Wälzkörper der ersten Mehrzahl von Wälzkörpern (40) kontaktiert.

4. Tandem-Wälzlager (10) nach Anspruch 3, wobei die partiell sphärische Fläche (80) des ersten Käfigs (60) die radial innere Halbkugel (43) kontaktiert und sich durch annähernd 170° bis 190° um die Radialachse (41) eines jeden der ersten Mehrzahl von Wälzkörpern (40) erstreckt.

5. Tandem-Wälzlager (10) nach Anspruch 2, wobei die radial inneren Nasen (76) des zweiten Käfigs (70) zwei Quadranten (55, 56) der radial inneren Halbkugel (53) jedes der den freien Enden (71) der Vorsprünge (74) benachbarten sphärischen Wälzkörper der zweiten Mehrzahl von Wälzkörpern (50) kontaktiert.

6. Tandem-Wälzlager (10) nach Anspruch 5, wobei die partiell sphärische Fläche (82) des zweiten Käfigs (70) die radial äußere Halbkugel (54) kontaktiert und sich durch annähernd 170° bis 190° um die Radialachse (51) eines jeden der zweiten Mehrzahl von Wälzkörpern (50) erstreckt.

7. Tandem-Wälzlager (10) nach Anspruch 1, wobei die zweite Wälzkörper-Unterbaueinheit (170) einen größeren Gesamtdurchmesser besitzt als ein Gesamtdurchmesser der ersten Wälzkörper-Unterbaueinheit (160).

8. Tandem-Wälzlager (10) nach Anspruch 1, wobei der erste Käfig (60) als Ganzes in einem Stück aus Kunststoff gefertigt ist.

9. Tandem-Wälzlager (10) nach Anspruch 1, wobei der zweite Käfig (70) als Ganzes in einem Stück aus Kunststoff gefertigt ist.

10. Tandem-Wälzlager (10) nach Anspruch 1, wobei die Vorsprünge (74) des zweiten Käfigs (70) einen ersten abgeschrägten Abschnitt (75) an einer radial äußeren, den axialen freien Enden (71) benachbarten Fläche aufweisen.

11. Tandem-Wälzlager (10) nach Anspruch 10, wobei die Vorsprünge (74) des zweiten Käfigs (70) einen zweiten abgeschrägten Abschnitt (77) an einer radial inneren, dem zweiten Ring (72) benachbarten Fläche aufweisen.

12. Tandem-Wälzlager (10) nach Anspruch 1, wobei die Vorsprünge (64) des ersten Käfigs (60) einen ersten abgeschrägten Abschnitt (65) an einer radial inneren, den axialen freien Enden (61) benachbarten Fläche und einen zweiten abgeschrägten Abschnitt (67) an einer radial äußeren, dem ersten Ring (62) benachbarten Fläche aufweisen.

13. Tandem-Wälzlager (10) nach Anspruch 1, wobei der zweite Ring (72) eine in radiale Richtung verlaufende Rippe (79) aufweist, die sich radial nach außen bis jenseits der Vorsprünge (74) des zweiten Käfigs (70) erstreckt.

14. Tandem-Wälzlager (10) nach Anspruch 1, wobei der erste Ring (62) eine in radiale Richtung verlaufende Rippe (26) aufweist, die sich radial nach innen bis jenseits der Vorsprünge (64) des ersten Käfigs (60) erstreckt.

15. Tandem-Wälzlager (10) nach Anspruch 11, wobei die Vorsprünge (64) des ersten Käfigs (60) einen dritten abgeschrägten Abschnitt (69) an einer radial äußeren, den axialen freien Enden (61) benachbarten Fläche aufweisen.

## Claims

1. Tandem anti-friction bearing (10) comprising:
- an inner bearing ring (20) and an outer bearing ring (30), each of the said bearing rings (20, 30) delimiting at least two raceways (22, 24, 32, 34),
- a first rolling body subunit (160) with a first plurality of rolling bodies (40) and a first cage (60) which is arranged in a first pair of raceways (24, 34) in the inner and outer bearing rings (20, 30),
- the first cage (60) having a first ring (62) with a plurality of axially extending projections (64), each projection (64) having an axial free end (61), and holding pockets (90) for the rolling bodies (40) being provided in each case between adjacent pairs of projections (64),
- each of the projections (64) having a pair of radially outer lugs (66) which extend in a circumferential direction into adjacent holding pockets (90), the radially outer lugs, lugs (66), which extend from adjacent projections (64) into each of the holding pockets (90) delimiting a radially outer holding surface (166, 168) for in each case one of the rolling bodies of the first plurality of rolling bodies (40) in the corresponding holding pocket (90), a partially spherical surface (80) on an inner surface of the first ring (62) and respective radially inner, partially cylindrical surfaces (68) which are arranged between the projections of the respective holding pocket (90) making contact with a corresponding rolling body of the first plurality of rolling bodies (40); and
- a second rolling body subunit (170) with a second plurality of rolling bodies (50) and a second cage (70) which is arranged in a second pair of raceways (22, 32) in the inner and the outer bearing ring (20, 30),
- the second cage (70) having a second ring (72) with a plurality of axially extending projections (74), each projection (74) having an axial free end (71), and holding pockets (100) for the rolling bodies (50) being provided in each case between adjacent pairs of projections (74),
- each of the projections (74) having a pair of radially inner lugs (76) which extend in the circumferential direction into adjacent holding pockets (100), the radially inner lugs (76) which extend from adjacent projections (74) into each of the holding pockets (100) delimiting a radially inner holding surface (176, 178) for in each case one of the rolling bodies of the second plurality of rolling bodies (50) in the corresponding holding pocket (100), a partially spherical surface (82) on an inner surface of the second ring (72) and respective radially outer, partially cylindrical surfaces (78) which are arranged between the projections (74) of the respective holding pocket (100) making contact with a corresponding rolling body of the second plurality of rolling bodies (50); and
- the free ends (61, 71) of the projections (64, 74) of the first and the second cage (60, 70) facing one another.

2. Tandem anti-friction bearing (10) according to Claim 1, the first and the second plurality of rolling bodies (40, 50) having spherical rolling bodies which in each case have a radial axis (41, 51) which extends through an axial centre point (12) of the tandem anti-friction bearing (10), an axial axis running in parallel and offset radially with respect to the axial centre point (12) of the tandem anti-friction bearing (10), an equator (42, 52) which runs orthogonally with respect to the radial axis dividing the spherical (40, 50) into radially inner and radially outer hemispheres (43, 53, 44, 54).

3. Tandem anti-friction bearing (10) according to Claim 2, the radially outer lugs (66) of the first cage (60) making contact with two quadrants (45, 46) of the radially outer hemisphere (44) of each of the spherical rolling bodies of the first plurality of rolling bodies (40), which spherical rolling bodies are adjacent to the free ends (61) of the projections (64).

4. Tandem anti-friction bearing (10) according to Claim 3, the partially spherical surface (80) of the first cage (60) making contact with the radially inner hemisphere (43) and extending by approximately 170° to 190° around the radial axis (41) of each of the first plurality of rolling bodies (40).

5. Tandem anti-friction bearing (10) according to Claim 2, the radially inner lugs (76) of the second cage (70) making contact with two quadrants (55, 56) of the radially inner hemisphere (53) of each of the spherical rolling bodies of the second plurality of rolling bodies (50), which spherical rolling bodies are adjacent to the free ends (71) of the projections (74).

6. Tandem anti-friction bearing (10) according to Claim 5, the partially spherical surface (82) of the second cage (70) making contact with the radially outer hemisphere (54) and extending by approximately 170° to 190° around the radial axis (51) of each of the second plurality of rolling bodies (50).

7. Tandem anti-friction bearing (10) according to Claim 1, the second rolling body subunit (170) having an overall diameter greater than an overall diameter of the first rolling body subunit (160).

8. Tandem anti-friction bearing (10) according to Claim 1, the first cage (60) being manufactured in its entirety in one piece from plastic.

9. Tandem anti-friction bearing (10) according to Claim 1, the second cage (70) being manufactured in its entirety in one piece from plastic.

10. Tandem anti-friction bearing (10) according to Claim 1, the projections (74) of the second cage (70) having a first bevelled section (75) on a radially outer surface which is adjacent to the axial free ends (71).

11. Tandem anti-friction bearing (10) according to Claim 10, the projections (74) of the second cage (70) having a second bevelled section (77) on a radially inner surface which is adjacent to the second ring (72).

12. Tandem anti-friction bearing (10) according to Claim 1, the projections (64) of the first cage (60) having a first bevelled section (65) on a radially inner surface which is adjacent to the axial free ends (61), and having a second bevelled section (67) on a radially outer surface which is adjacent to the first ring (62).

13. Tandem anti-friction bearing (10) according to Claim 1, the second ring (72) having a rib (79) which runs in the radial direction and extends radially to the outside as far as beyond the projections (74) of the second cage (70) .

14. Tandem anti-friction bearing (10) according to Claim 1, the first ring (62) having a rib (26) which runs in the radial direction and extends radially to the inside as far as beyond the projections (64) of the first cage (60) .

15. Tandem anti-friction bearing (10) according to Claim 11, the projections (64) of the first cage (60) having a third bevelled section (69) on a radially outer surface which is adjacent to the axial free ends (61).

## Revendications

1. Palier à roulement en tandem (10), comprenant :
- une bague de palier interne (20) et une bague de palier externe (30), chacune de ces bagues de palier (20, 30) délimitant au moins deux chemins de roulement (22, 24, 32, 34),
- une première unité de support de corps de roulement (160) comprenant une première pluralité de corps de roulement (40) et une première cage (60) disposée dans une première paire de chemins de roulement (24, 34) dans les bagues de palier interne et externe (20, 30),
- la première cage (60) présentant une première bague (62) avec une pluralité de saillies (64) s'étendant axialement, chaque saillie (64) présentant une extrémité axiale libre (61) et des cavités de retenue (90) pour les corps de roulement (40) étant à chaque fois prévues entre des paires adjacentes de saillies (64),
- chacune des saillies (64) présentant une paire d'ergots radialement extérieurs (66) qui s'étendent dans une direction périphérique dans des cavités de retenue adjacentes (90), les ergots radialement extérieurs, ergots (66), qui s'étendent depuis des saillies adjacentes (64) dans chacune des cavités de retenue (90), délimitant une surface de retenue radialement extérieure (166, 168) pour l'un des corps de roulement respectif de la première pluralité de corps de roulement (40) dans la cavité de retenue correspondante (90), une surface partiellement sphérique (80) au niveau d'une surface interne de la première bague (62) et des surfaces partiellement cylindriques (68), radialement intérieures, disposées entre les saillies de la cavité de retenue respective (90), venant en contact avec un corps de roulement correspondant de la première pluralité de corps de roulement (40) ; et
- une deuxième unité de support de corps de roulement (170) comprenant une deuxième pluralité de corps de roulement (50) et une deuxième cage (70) disposée dans une deuxième paire de chemins de roulement (22, 32) dans la bague de palier interne et la bague de palier externe (20, 30),
- la deuxième cage (70) présentant une deuxième bague (72) avec une pluralité de saillies (74) s'étendant axialement, chaque saillie (74) présentant une extrémité axiale libre (71) et des cavités de retenue (100) pour les corps de roulement (50) étant chaque fois prévues entre des paires adjacentes de saillies (74),
- chacune des saillies (74) présentant une paire d'ergots radialement intérieurs (76) qui s'étendent dans la direction périphérique dans des cavités de retenues adjacentes (100), les ergots radialement intérieurs (76) qui s'étendent depuis des saillies adjacentes (74) dans chacune des cavités de retenue (100), délimitant une surface de retenue radialement intérieure (176, 178) pour à chaque fois un des corps de roulement de la deuxième pluralité de corps de roulement (50) dans la cavité de retenue correspondante (100), une surface partiellement sphérique (82) au niveau d'une surface interne de la deuxième bague (72) et à chaque fois des surfaces partiellement cylindriques (78), radialement extérieures, disposées entre les saillies (74) de la cavité de retenue respective (100), venant en contact avec un corps de roulement correspondant de la deuxième pluralité de corps de roulement (50) ; et
- les extrémités libres (61, 71) des saillies (64, 74) de la première et de la deuxième cage (60, 70) étant tournées l'une vers l'autre.

2. Palier à roulement en tandem (10) selon la revendication 1, dans lequel la première et la deuxième pluralité de corps de roulement (40, 50) présentent des corps de roulement sphériques qui présentent à chaque fois un axe radial (41, 51) qui s'étend à travers un centre axial (12) du palier à roulement en tandem (10), un axe axial s'étendant parallèlement et de manière décalée radialement par rapport au centre axial (12) du palier à roulement en tandem (10), un équateur (42, 52) s'étendant perpendiculairement à l'axe radial divisant les sphériques (40, 50) en demi-billes (43, 53, 44, 54) radialement intérieures et radialement extérieures.

3. Palier à roulement en tandem (10) selon la revendication 2, dans lequel les ergots radialement extérieurs (66) de la première cage (60) viennent en contact avec deux quadrants (45, 46) de la demi-bille radialement extérieure (44) de chacun des corps de roulement sphériques, adjacents aux extrémités libres (61) des saillies (64), de la première pluralité de corps de roulement (40).

4. Palier à roulement en tandem (10) selon la revendication 3, dans lequel la surface partiellement sphérique (80) de la première cage (60) vient en contact avec la demi-bille radialement intérieure (43) et s'étend sur approximativement 170° à 190° autour de l'axe radial (41) de chacun de la première pluralité de corps de roulement (40).

5. Palier à roulement en tandem (10) selon la revendication 2, dans lequel les ergots radialement intérieurs (76) de la deuxième cage (70) viennent en contact avec deux quadrants (55, 56) de la demi-bille radialement intérieure (53) de chacun des corps de roulements sphériques, adjacents aux extrémités libres (71) des saillies (74), de la deuxième pluralité de corps de roulement (50).

6. Palier à roulement en tandem (10) selon la revendication 5, dans lequel la surface partiellement sphérique (82) de la deuxième cage (70) vient en contact avec la demi-bille radialement extérieure (54) et s'étend sur approximativement 170° à 190° autour de l'axe radial (51) de chacun de la deuxième pluralité de corps de roulement (50).

7. Palier à roulement en tandem (10) selon la revendication 1, dans lequel la deuxième unité de support de corps de roulement (170) présente un plus grand diamètre total qu'un diamètre total de la première unité de support de corps de roulement (160).

8. Palier à roulement en tandem (10) selon la revendication 1, dans lequel la première cage (60) dans son ensemble est fabriquée d'une seule pièce en plastique.

9. Palier à roulement en tandem (10) selon la revendication 1, dans lequel la deuxième cage (70) dans son ensemble est fabriquée d'une seule pièce en plastique.

10. Palier à roulement en tandem (10) selon la revendication 1, dans lequel les saillies (74) de la deuxième cage (70) présentent une première portion biseautée (75) au niveau d'une surface radialement extérieure, adjacente aux extrémités axiales libres (71).

11. Palier à roulement en tandem (10) selon la revendication 10, dans lequel les saillies (74) de la deuxième cage (70) présentent une deuxième portion biseautée (77) au niveau d'une surface radialement intérieure, adjacente à la deuxième bague (72).

12. Palier à roulement en tandem (10) selon la revendication 1, dans lequel les saillies (64) de la première cage (60) présentent une première portion biseautée (65) au niveau d'une surface radialement intérieure, adjacente aux extrémités axiales libres (61) et une deuxième portion biseautée (67) au niveau d'une surface radialement extérieure, adjacente à la première bague (62).

13. Palier à roulement en tandem (10) selon la revendication 1, dans lequel la deuxième bague (72) présente une nervure (79) s'étendant dans une direction radiale, qui s'étend radialement vers l'extérieur jusqu'au-delà des saillies (74) de la deuxième cage (70).

14. Palier à roulement en tandem (10) selon la revendication 1, dans lequel la première bague (62) présente une nervure (26) s'étendant dans la direction radiale, nervure qui s'étend radialement vers l'intérieur jusqu'au-delà des saillies (64) de la première cage (60).

15. Palier à roulement en tandem (10) selon la revendication 11, dans lequel les saillies (64) de la première cage (60) présente une troisième portion biseautée (69) au niveau d'une surface radialement extérieure, adjacente aux extrémités axiales libres (61).
